**Europäisches Patentamt**

**European Patent Office**

**Office européen des brevets**

(19)

(11) Veröffentlichungsnummer : **0 430 964 B1**

(12) # EUROPÄISCHE PATENTSCHRIFT

(45) Veröffentlichungstag der Patentschrift :
**06.05.92 Patentblatt 92/19**

(51) Int. Cl.$^5$ : **F01N 3/20, F01N 3/28**

(21) Anmeldenummer : **89908161.6**

(22) Anmeldetag : **14.07.89**

(86) Internationale Anmeldenummer :
**PCT/EP89/00818**

(87) Internationale Veröffentlichungsnummer :
**WO 90/02250 08.03.90 Gazette 90/06**

(54) **Abgaskatalysatoranordnung.**

(30) Priorität : **26.08.88 DE 8810816 U**

(43) Veröffentlichungstag der Anmeldung :
**12.06.91 Patentblatt 91/24**

(45) Bekanntmachung des Hinweises auf die
Patenterteilung :
**06.05.92 Patentblatt 92/19**

(84) Benannte Vertragsstaaten :
**DE FR GB IT SE**

(56) Entgegenhaltungen :
**AT-C- 316 934**
**DE-A- 1 451 881**
**DE-A- 2 420 678**

(56) Entgegenhaltungen :
**US-A- 3 817 031**
**US-A- 3 963 447**
**Patent Abstracts of Japan, vol. 9, Nr.275**
**(M-426)(1988) 2.Nov. 1985, & JP-A-60 119314**

(73) Patentinhaber : **Emitec Gesellschaft für**
**Emissionstechnologie mbH**
**Hauptstrasse 150**
**W-5204 Lohmar 1 (DE)**

(72) Erfinder : **SWARS, Helmut**
**Riedweg 11**
**W-5060 Bergisch Gladbach 1 (DE)**

(74) Vertreter : **Fuchs, Franz-Josef, Dr.-Ing. et al**
**Postfach 22 13 17**
**W-8000 München 22 (DE)**

EP 0 430 964 B1

## Beschreibung

Die vorliegende Erfindung betrifft einen Katalysator, der in einem von Abgas durchströmbaren Gehäuse angeordnet ist, wobei in dem Gehäuse zusätzlich ein Umgehungsweg für das Abgas vorhanden ist. Ein solcher Katalysator, der durch Strömungsleitelemente wahlweise vom Abgas durchströmt oder umgangen werden kann, ist aus der DE-OS-33 28 205 bekannt. Eine Umschaltung von Hand ist in dieser Schrift vorgesehen, wenn beispielsweise ein für den Katalysator nicht geeigneter Kraftstoff verwendet wird.

Weiter ist es aus verschiedenen Dokumenten bekannt, daß der Strömungsweg eines Abgases in. Abhängigkeit von der Temperatur durch Leitelemente beeinflußt werden kann, insbesondere auch im Zusammenhang mit dem Ansprechverhalten von Katalysatoren in der Kaltstartphase eines Kraftfahrzeuges. Eine solche Vorgehensweise und entsprechende Anordnungen werden beispielsweise in der DE-A-20 40 584, der DE-A-22 47 947, der DE-A-36 29 945 oder der US-A-3 972 685 beschrieben. Auch die DE-A-24 20 672, von der die vorliegende Erfindung ausgeht, zeigt einen umgehbaren Startkatalysator mit einem von außen betätigten Strömungsleitelement.

Die bekannten Anordnungen erfordern relativ komplizierte Gehäuse und benötigen aufwendige Betätigungseinrichtungen für Strömungsleitelemente.

Aufgabe der vorliegenden Erfindung ist die Schaffung einer kompakt und einfach aufgebauten Anordnung, insbesondere für den motornahen Einbau, eines Katalysators in einem Gehäuse, bei welcher der Katalysator beiniedriger Temperatur vom Abgas durchströmbar und bei hoher Temperatur umgehbar ist. Die Anordnung soll ohne Rohrleitungsverzweigungen und komplizierte Betätigungsmechanismen für das Strömungsleitelement auskommen.

Diese Aufgabe wird erfindungsgemäß gelöst durch einen in einem von einem Abgas durchströmbaren Gehäuse angeordneten Katalysator, insbesondere Startkatalysator, für ein Kraftfahrzeug mit Verbrennungsmotor, wobei das Gehäuse mindestens einen Einlaß und mindestens einen Auslaß aufweist und der Katalysator nur einen Teil der Querschnittsfläche des Gehäuses ausfüllt, so daß ein am Katalysator vorbeiführender Umgehungsweg für das Abgas frei bleibt, und wobei das Gehäuse mindestens ein verstellbares Strömungsleitelement enthält, welches in Abhängigkeit von seiner Stellung das Abgas durch den Katalysator oder durch den Umgehungsweg leiten kann, mit folgenden Merkmalen:

a) das Strömungsleitelement ist eine sich unter Temperatureinfluß verstellende Klappe, insbesondere eine Bimetallklappe;

b) die Klappe bildet bei hoher Temperatur, z. B. oberhalb von 700 bis 900 °C, zumindest in Teilbereichen eine Trennwand zwischen dem Katalysator und dem Umgehungsweg.

Die erfindungsgemäße Anordnung des Strömungsleitelementes bewirkt, daß ab einer bestimmten Betriebstemperatur, die beispielsweise bei 700 °C oder höher liegen kann, der Katalysator nicht mehr vom Abgas direkt angeströmt und durchströmt wird, sondern das Abgas durch den Umgehungsweg geführt wird. Dies schützt insbesondere einen motornah eingebauten Katalysator vor Überhitzung, wobei die als Trennwand wirkende Klappe nicht allein der Strömungsführung, sondern auch der thermischen Abschirmung des Katalysators gegenüber dem heißen Abgas dient. Im kalten Zustand nimmt die Klappe eine Stellung ein, durch die praktisch das gesamte Abgas durch den Katalysator geleitet wird. Der Katalysator gelangt dadurch schnell auf Betriebstemperatur und beginnt mit der katalytischen Umsetzung. Hierdurch können schädliche Abgase schon in der Kaltstartphase stark reduziert werden, wobei außerdem ein nachgeordneter Hauptkatalysator schneller anspringt. Sobald der Hauptkatalysator arbeitet und der Motor Abgase mit hoher Temperatur ausstößt, wird der vargeschaltete Katalysator nicht nur nicht mehr benötigt, sondern kann ggf. auch durch Übertemperaturen beschädigt werden. Dies verhindert die Klappe, indem sie bei zunehmender Temperatur immer mehr der Querschnittsfläche des Umgehungsweges freigibt und schließlich den Katalysator vollständig abschaltet. Dies läßt sich in besonders einfacher Weise durch eine Bimetallklappe verwirklichen, jedoch sind auch andere unter Temperatureinfluß selbsttätig wirkende Betätigungsmittel in Verbindung mit einer gelenkig oder biegsam befestigten Klappe möglich.

Als günstig hat sich erwiesen, bei metallischen Katalysatoren mit einem Mantelrohr die Klappe direkt an diesem zu befestigen, vorzugsweise anzuschweißen. Solche metallischen Katalysator-Trägerkörper sind beispielsweise in der EP-A-O 136 515, der EP-A-O 159 468, der EP-A-O 220 468, der EP-A-O 245 737 und der EP-A-O 245 738 beschrieben. Für die erfindungsgemäße Anwendung eignen sich insbesondere Formen mit einem nicht runden Querschnitt, da sich mit diesen die gewünschte Anordnung von Katalysator und Umgehungsweg in einem Gehäuse am leichtesten verwirklichen läßt.

Da auch schon geringe Teilströme des Abgases, die trotz des voll geöffneten Umgehungsweges noch den Katalysator durchströmen, zu dessen Überhitzung führen können, ist es besonders wichtig, die Strömung möglichst vollständig umzuleiten. Hier können Ausformungen am Gehäuse, welche von der Klappe in ihren Endstellungen hinterschnitten werden können, sehr hilfreich sein. Dies gilt insbesondere für eine geeignete Formgebung von Gehäuse und Klappe im Bereich der Endstellung bei hoher Temperatur.

Der verbleibende Reststrom von Abgas durch den Katalysator kann ggf. weiter reduziert werden, indem nicht nur die Anströmseite des Katalysators, sondern auch dessen Abströmseite durch eine Klappe gegenüber dem Umgehungsweg abgesperrt werden. Dies kann entweder durch eine zweite Klappe oder durch eine sich nach beiden Seiten erstreckende, etwa in ihrer Mitte befestigte Klappe erreicht werden. Entscheidend ist aber in jedem Fall die Abschirmung der Vorderseite des Katalysators, die am leichtesten durch eine entgegen der Strömung gerichtete Klappe erreicht werden kann.

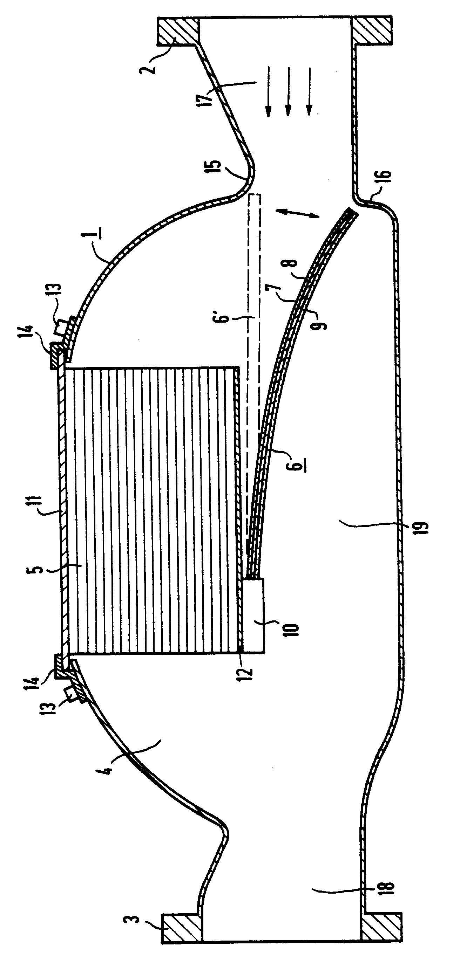

Wie anhand der Zeichnung näher beschrieben wird, kann es vorteilhaft sein, einen Katalysator mit daran befestigter Klappe auswechselbar in einem Gehäuse zu befestigen, vorzugsweise in einem Gußgehäuse. Allerdings ist dies nur eine Ausführungsvariante, da komplett verschweißte Gehäuse mit an einer Seite darin befestigten Katalysatoren ebenfalls fertigungstechnische Vorteile haben können.

Ein Ausführungsbeispiel der Erfindung ist schematisch in der Zeichnung dargestellt, und zwar als Längsschnitt durch eine erfindungsgemäße Anordnung mit einem temperaturabhängig umgehbaren Katalysator.

Die Zeichnung zeigt ein bauchiges Gehäuse 1 mit einem Einlaß 17, einem Auslaß 18 und Flanschen 2, 3 an seinen beiden Enden. Der freie Querschnitt 4 im bauchigen Bereich des Gehäuses 1 ist nur teilweise von einem Katalysator 5 ausgefüllt, während der verbleibende Querschnitt als Umgehungsweg 19 zur Verfügung steht. Der Katalysator 5 ist an einer Halteplatte 11 befestigt und weist ein Mantelrohr 12 auf. Das Gehäuse 1 hat in seinem oberen Bereich eine der Form des Katalysators 5 entsprechende Öffnung, welche von der Halteplatte 11 wie mit einem Deckel verschlossen ist. Dabei wird die Halteplatte 11 durch Befestigungsmittel 13, 14 gegenüber dem Gehäuse 1 fixiert. An dem Mantelrohr 12 des Katalysators 5 ist mit einer Halterung 10 eine Bimetallklappe 6 befestigt, welche aus mindestens zwei Metallschichten 7, 8 mit unterschiedlichem thermischen Ausdehnungskoeffizienten besteht und ggf. noch mit einer Wärmeisolierung 9 versehen ist. Diese Bimetallklappe 6 befindet sich in kaltem Zustand in der dargestellten Position, so daß sie in Zusammenwirken mit einer Ausformung 16 des Gehäuses 1 das durch Pfeile angedeutete anströmende Abgas zum Katalysator hin ablenkt. In kaltem Zustand wird daher der Katalysator 5 vom größten Teil des Abgases durchströmt. Wärmt sich jedoch die Bimetallklappe 6 auf, so bewegt sie sich, wie durch einen Pfeil angedeutet, in die gestrichelt gezeichnete Position 6'. Im Zusammenwirken mit der Form 15 an der Einlaßseite des Gehäuses wird so der Katalysator 5 weitestgehend vor heißem Abgas abgeschirmt, welches nun durch den Umgehungsweg 19 strömt. Dabei ist der Katalysator 5 zusammen mit der Bimetallklappe 6 leicht auswechselbar. Erfindungsgemäße Anordnungen eignen sich besonders für motornah eingesetzte Vorkatalysatoren.

## Patentansprüche

1. Abgaskatalysatoranordnung mit einem in einem von einem Abgas durchströmbaren Gehäuse (1) angeordneten Katalysator (5), insbesondere Startkatalysator, für ein Kraftfahrzeug mit Verbrennungsmotor, wobei das Gehäuse (1) mindestens einen Einlaß (17) und mindestens einen Auslaß (18) aufweist und der Katalysator (5) nur einen Teil der Querschnittsfläche des Gehäuses ausfüllt, so daß ein am Katalysator vorbeiführender Umgehungsweg (19) für das Abgas frei bleibt, und wobei das Gehäuse (1) mindestens ein verstellbares Strömungsleitelement (6) enthält, welches in Abhängigkeit von seiner Stellung (6, 6') das Abgas durch den Katalysator (5) oder durch den Umgehungsweg (19) leiten kann, **gekennzeichnet durch** folgende Merkmale:
   a) das Strömungsleitelement (6) ist eine sich unter Temperatureinfluß selbst verstellende Klappe, insbesondere eine Bimetallklappe (7, 8);
   b) die Klappe (6) bildet bei hoher Temperatur, z. B. oberhalb von 700 bis 900 °C, zumindest in Teilbereichen eine Schützende Trennwand zwischen dem Katalysator (5) und dem Umgehungsweg (19).

2. Abgaskatalysatoranordnung Anspruch 1, **dadurch gekennzeichnet**, daß der Katalysator (5) einen Mantel (12) aufweist, an dem die Klappe (6) befestigt (10) ist.

3. Abgaskatalysatoranordnung nach Anspruch 1, 2 oder 3, **dadurch gekennzeichnet,** daß die Klappe (6) in ihrer Länge und ihrem temperaturbedingten Verstellweg so bemessen ist, daß sie entsprechend ausgebildete Ausfarmungen (15, 16) im Einlaßbereich des Gehäuses (1) hinterschneiden kann, insbesondere in ihrer Stellung (6') bei hoher Temperatur.

4. Abgaskatalysatoranordnung nach Anspuch 1, 2 oder 3, **dadurch gekennzeichnet**, daß die Klappe (6) entgegen der Abgasströmung gerichtet ist.

5. Abgaskatalysatoranordnung nach Anspruch 1, 2 oder 3, **dadurch gekennzeichnet**, daß durch eine doppelseitig wirkende Klappe oder durch zwei Klappen (6) der Katalysator (5) bei hoher Temperatur sowohl anströmseitig (17) wie auch abströmseitig (18) vom Umgehungsweg (19) absperrbar ist.

6. Abgaskatalysatoranordnung nach Anspruch 2, **dadurch gekennzeichnet**, daß Katalysator (5) und Klappe (6) gemeinsam aus dem Gehäuse (1) herausnehmbar sind.

EP 0 430 964 B1

**Claims**

1. Exhaust gas catalytic converter arrangement having a catalytic converter (5), in particular a primary catalytic converter, arranged in a housing (1) through which an exhaust gas can flow, for a motor vehicle with internal combustion engine, in which the housing (1) has at least one inlet (17) and at least one outlet (18) and the catalytic converter (5) only fills a portion of the cross-sectional area of the housing so that a by-pass route (19) leading past the catalytic converter remains free for the exhaust gas and in which the housing (1) contains at least one adjustable flow-directing element (6) which, depending upon its position (6, 6′), can direct the exhaust gas through the catalytic converter (5) or through the bypass route (19), characterised by the following features:

a) the flow-directing element (6) is a flap, in particular a bimetal flap (7, 8) which automatically adjusts under the influence of temperature;

b) in the case of high temperature, for example above 700 to 900°C, the flap (6) forms, at least in partial areas, a protective partition wall between the catalytic converter (5) and the by-pass route (19).

2. Exhaust gas catalytic converter arrangement according to claim 1, characterised in that the catalytic converter (5) has a jacket (12) to which the flap (6) is secured (10).

3. Exhaust gas catalytic converter arrangement according to claim 1 or 2, characterised in that the length and temperature-conditional adjustment path of the flap (6) are dimensioned so that it can undercut correspondingly formed protuberances (15, 16) in the inlet region of the housing (1), in particular in its position (6′) at high temperature.

4. Exhaust gas catalytic converter arrangement according to claim 1, 2 or 3, characterised in that the flap (6) is directed in opposition to the exhaust gas flow.

5. Exhaust gas catalytic converter arrangement according to claim 1, 2 or 3, characterised in that in the case of high temperature the catalytic converter (5) can be shut off from the by-pass route (19) both on the approach-flow side (17) and on the flow-off side (18) by means of a flap acting in either direction or by means of two flaps (6).

6. Exhaust gas catalytic converter arrangement according to claim 2, characterised in that catalytic converter (5) and flap (6) can be removed from the housing (1) together.

**Revendications**

1. Dispositif d'échappement catalytique comprenant un catalyseur (5), notamment un catalyseur de démarrage, pour un véhicule automobile à moteur à combustion interne, disposé dans un boîtier (1) dans lequel peut passer un gaz d'échappement, le boîtier (1) comportant au moins une entrée (17) et au moins une sortie (18), et le catalyseur (5) ne remplissant qu'une partie de la surface de la section transversale du boîtier, de manière à laisser dégagée, pour le gaz d'échappement, une voie de contournement (19) passant devant le catalyseur, le boîtier (1) comportant au moins un déflecteur de courant (6) réglable, qui peut envoyer, en fonction de sa position (6,6′), le gaz d'échappement dans le catalyseur (5) ou dans la voie de contournement (19), remarquable par les caractéristiques suivantes :

a) le déflecteur de courant (6) est un volet se réglant automatiquement sous l'influence de la température, notamment un volet à bilame (7,8);

b) le volet (6) forme, à une température élevée, par exemple au-dessus de 700 à 900°C, au moins dans des zones partielles, une cloison de séparation protectrice entre le catalyseur (5) et la voie de contournement (19).

2. Dispositif d'échappement catalytique suivant la revendication 1, caractérisé en ce que le catalyseur (5) comporte une enveloppe (12) à laquelle le volet (6) est fixé (10).

3. Dispositif d'échappement catalytique suivant la revendication 2, caractérisé en ce que le volet (6) présente, pour ce qui concerne sa longueur et l'amplitude de son déplacement qui est en fonction de la température, des dimenssions telles qu'il peut venir derrière des excroissances (15,16) qui sont constituées, de manière adéquate, à la partie d'entrée du boîtier (1), notamment en sa position (6′) à haute température.

4. Dispositif d'échappement catalytique suivant la revendication 1, 2 ou 3, caractérisé en ce que le volet (6) est dirigé dans le sens opposé à celui du courant du gaz d'échappement.

5. Dispositif d'échappement catalytique suivant la revendication 1, 2 ou 3, caractérisé en ce que, à haute température, le catalyseur (5) peut être court-circuité, à la fois du côté entrée (17) et du côté sortie (18), par la voie de contournement (19), grâce à un volet agissant des deux côtés ou grâce à deux volets (6).

6. Dispositif d'échappement catalytique suivant la revendication 2, caractérisé en ce que le catalyseur (5) et le volet (6) peuvent être enlevés ensemble du boîtier (1).

4